# EUROPEAN PATENT SPECIFICATION

(11) **EP 4 629 837 B1**
(45) Date of publication and mention of the grant of the patent: **29.07.2026**
(21) Application number: 23833201.9
(22) Date of filing: 04.12.2023
(51) Int. Cl.: A23K 10/30, A23K 20/121, A23K 50/30

(54) **ANIMAL FEED COMPOSITION HAVING A COMBINATION OF FENUGREEK AND NEOHESPERIDIN DIHYDROCHALCONE (NHDC) TO IMPROVE PERFORMANCE OF ANIMALS OR STIMULATE THEIR SWEET TASTE RECEPTORS**
TIERFUTTERZUSAMMENSETZUNG MIT EINER KOMBINATION AUS FENUGREEK UND NEOHESPERIDINDIHYDROCHALCON (NHDC) ZUR VERBESSERUNG DER LEISTUNG VON TIEREN
COMPOSITION D'ALIMENT POUR ANIMAUX AYANT UNE COMBINAISON DE FENUGREC ET DE NÉOHESPÉRIDINE DIHYDROCHALCONE (NHDC) POUR AMÉLIORER LES PERFORMANCES DES ANIMAUX

(30) Priority: 07.12.2022 EP 22020599
(43) Date of publication of application: 15.10.2025
(73) Proprietor: ADM International Sàrl, 1180 Rolle (CH)
(72) Inventor: RAMILLIEN, Mathilde, 1180 Rolle (CH); FAUGERON, Joëlle, 1180 Rolle (CH); DI CURZIO, Sandra, 1180 Rolle (CH); GARCIA, Estelle, 1180 Rolle (CH); BLANCHARD, Alexandra, 1180 Rolle (CH); IONESCU, Catherine, 1180 Rolle (CH); SHIRAZI-BEECHEY, Soraya, Liverpool Foundation Building 765 Brownlow Hill Liverpool L69 7ZX (GB)
(74) Representative: Stona, Daniel
(86) International application number: PCT/IB2023/062174
(87) International publication number: WO 2024/121704

(56) References cited:
- EP-A1- 2 995 202
- WO-A1-2014/033218
- CN-A- 109 463 553
- KR-B1- 101 940 539

## Description

### TECHNICAL FIELD

The present invention generally relates to animal feed composition for improving livestock performance. More particularly the invention relates to animal feed additives containing sweeteners and flavonoids.

### BACKGROUND OF THE INVENTION

Any discussion of the prior art throughout the specification is in no way an admission that such prior art is widely known or forms part of common general knowledge in the field.

The sensations of taste and smell enhance the appeal of food and may also increase the appetite of both humans and animals. Particularly, animals have highly developed sense of smell and taste in comparison to humans. Taste plays an essential role in the eating habits of livestock animals such as cows and pigs. An animal's tongue contains taste receptors or taste buds comprising a number of sensory cells. Studies show that humans have around 9,000 taste buds, in comparison, pigs have around 15,000 taste buds and cows have around 25,000 taste buds. Therefore, the taste of feed for livestock needs to be improved by adding flavors such as sweeteners which thereby could improve the feeding habits, performance, and health of livestock.

Sweeteners for animal nutrition are developed by flavor chemists and traditionally human subjects have been used to test the sweet compounds and determine their intensity. However, T1R2/T1R3 receptors known as the subunits of the sweet taste receptors show some differences in pigs when compared to the receptors in humans. The taste receptors in pigs potentially show differences in sensibility to sweeteners and other compounds.

It has been shown that there is a correlation between activation of sweet taste receptor *in vitro* (heterologous systems of expression) and behavioral taste preference in humans. Further, Daly et al. (Biochemical and Biophysical Research Communications 542: 54-58 (2021)) demonstrated that the supplementation of a pigs diet with sweeteners, activating pig sweet taste receptors *in vitro,* activate pig intestinal T1R2/T1R3, inducing the upregulation of intestinal sodium glucose transporter 1 (SGLT1). On the other hand, sweeteners that do not activate the pig sweet taste receptors *in vitro,* do not induce the upregulation of pig intestinal SGLT1. Together these data demonstrated that *in vivo* effects obtained with sweeteners supplementation are correlated to *in vitro* activation of sweet taste receptors. This shows that the heterologous system of expression is a relevant tool to screen potential sweet molecules for pigs application.

Daly *et al.* also demonstrated that some molecules known as sweet components for humans, in particular aspartame and cyclamate, do not activate pig sweet taste receptors *in vitro,* and do not induce higher glucose uptake in the pig intestine. These data confirmed the variation of sweet taste receptors' activation between species and consequently the importance of using a screening system that is species specific.

### DESCRIPTION OF THE FIGURES

Figure 1 is an embodiment of an overview of methods of the expression of pig sweet taste receptor of the present invention.
Figure 2 is a schematic diagram of one embodiment of ligand binding and detection of activation of pig sweet taste receptors in cells of the present invention.
Figure 3 shows an embodiment of a dose response curve of the present invention.

### SUMMARY OF THE INVENTION

A need exists for an improved feed composition that improves the performance of animals. It was surprisingly found that feeding an animal an animal feed composition that combines fenugreek and neohesperidin dihydrochalcone (NHDC) synergizes the properties of both ingredients to enhance the performance of such animals.

In one embodiment, a composition or animal feed additive for improving the performance of livestock comprises fenugreek and neohesperidin dihydrochalcone (NHDC).

Uses of the composition or animal feed additive for improving pig performance or activating pig sweet taste receptors are also disclosed.

In another embodiment, a method for enhancing the performance of an animal comprises mixing fenugreek and neohesperidin dihydrochalcone (NHDC) with an animal feed and feeding the animal feed to the animal.

### DETAILED DESCRIPTION OF THE INVENTION

It will be understood that this disclosure is not limited to the particular compositions and methodologies described herein, as there can be multiple possible embodiments of the present disclosure which are not expressly illustrated in the present disclosure. It is also to be understood that the terminology used in the description is for the purpose of describing the particular versions or embodiments only, and is not intended to limit the scope of the present disclosure.

Owing to the differences between the taste receptors of livestock and humans, it was decided to perform a series of different *in vitro* and *in vivo* tests for observing the activation of pig sweet taste receptors in heterologous systems. The results of such *in vitro* tests show that a variety of different compounds were able to activate the T1R2/T1 R3 receptor of pigs, even if these compounds are conventionally not considered as sweet. Further, the results show that the addition of fenugreek and neohesperidin dihydrochalcone (NHDC) in combination provide synergy to the efficacy of the feed formula in terms of pig sweet taste activation and/or on piglet performance.

In the present invention there is disclosed a selection of compounds that were evaluated for their ability to activate pig sweet taste receptors. The results obtained showed that a variety of different compounds, even if not initially considered as sweet, were able to activate the pig sweet taste receptors. Combinations of compounds were formulated and further evaluated *in vivo* and *in vitro.* The results showed a synergistic effect of the combination of fenugreek and neohesperidin dihydrochalcone (NHDC) that conferred an increased efficacy of the formula in terms of pig sweet taste receptors activation *in vitro. In vivo* assessment of the combination demonstrated improved performance of piglets as well.

In the various embodiments described herein, fenugreek can be read as one or a combination of the following components fenugreek *(Trigonella foenumgraecum)* seed and/or fenugreek leaves and their powders, extracts, oils and tinctures, fenugreek seed extract, fenugreek oil, fenugreek, dried fenugreek powder, fenugreek extract, and/or any product containing sotolone. Neohesperidin dihydrochalcone (NHDC) can be understood as 1-4, 1-(4-((2-*O*-[6-Deoxy-α-L-mannopyranosyl]-β-D-glucopyranosyl)oxy)-2,6-dihydroxyphenyl)-3-[3-hydroxy-4-methoxyphenyl]-1-poranone. The NHDC can have a purity higher than 80%, preferably higher than 90%, more preferably higher than 95%. The NHDC most preferably has a purity ranging from 95 to 100%.

In various embodiments, various compounds alone or combined, hereafter referenced as a premix (also premixture), were evaluated for the ability of said compounds to activate pig sweet tase receptors alone or in combination with NHDC and/or fenugreek. A premix (premixture) can consist of one compound only. The premixes evaluated included vanillin, glycyrrhizinate, stevia, monk fruit, propylene glycol, and combinations of any thereof. Vanillin can be understood as one or a combination of the following components including 4-Hydroxy-3-methoxybenzaldehyde, Vanillic aldehyde, Vanillin, Ethylvanillin, 3-Ethoxy-4-hydroxybenzaldehyde, Vanilla, *Vanilla planifolia, Vanilla pompona, Vanilla tahitensis* as powders, extracts, oils, tinctures. Glycyrrhizinate can be understood as one or a combination of the following components including glyccyrrhizin, glycyrrhizinate ammonium (glycyrrhizinate NH₃) or products containing glycyrrhizin such as licorice root extract or monesia bark. Stevia can be understood as one or a combination of the following components including Stevia, *Stevia rebaudiana, Stevia eupatoria,* their powders, extracts, oils and tinctures, stevia extract, stevia leaf extract and/or products containing steviol glycoside(s), rebaudioside(s), stevioside(s). Monk fruit can be understood as one or a combination of the following components including fruits of *Siraitia grosvenorii,* Luo Han Guo, *Momordica grosvenorii, Thladiantha grosvenorii,* Swingle fruit and/or *Siraitia siamensis* under the form of powders, juice, extracts, oils and tinctures or products containing mogroside(s) or mogroside V.

In the various compositions or animal feed additives described herein, a carrier can be understood to refer to a salt, maltodextrin, gum, wax, starch, cellulose, cellulose derivative, dextrose, silica, hydrogenated fat, and combinations of any thereof.

In one embodiment, the present invention describes a composition or animal feed additive composition for improving the performance of livestock such as pigs and piglets. The composition or animal feed additive composition comprises fenugreek and neohesperidin dihydrochalcone (NHDC). In another aspect, the composition or animal feed additive composition further comprises at least one premix component selected from the group consisting of vanillin, glycyrrhizinate, stevia, monk fruit, propylene glycol. The composition or animal feed additive composition can also comprise combinations of any of said premix components. In another aspect, the composition or animal feed additive composition may also include a carrier selected from the group consisting of a salt, maltodextrin, gum, wax, starch, cellulose, cellulose derivative, dextrose, silica, hydrogenated fat, and combinations of any thereof.

In an embodiment of the present invention, a method for enhancing the performance of livestock is disclosed. Performance can be assessed among other things by, but not restricted to, body weight gain, average daily feed intake and/or feed conversion ratio. The body weight gain can be a total body weight gain over a certain period of time. According to the method, the livestock such as pigs and piglets are fed a composition comprising fenugreek and neohesperidin dihydrochalcone (NHDC). Such feed composition provided to the animals may further comprise at least one premix component selected from the group consisting of vanillin, glycyrrhizinate, stevia, monk fruit, propylene glycol. Such feed composition provided to the animals can also comprise combinations of any of said premix components. In another aspect, the animal feed additive composition may also include a carrier selected from the group consisting of a salt, maltodextrin, gum, wax, starch, cellulose, cellulose derivative, dextrose, silica, hydrogenated fat, and combinations of any thereof.

In one embodiment, the composition or animal feed additive comprises fenugreek and neohesperidin dihydrochalcone (NHDC) and further comprises a premix comprising vanillin, glycyrrhizinate, stevia, monk fruit and propylene glycol.

In another embodiment, the composition or animal feed additive comprises fenugreek and neohesperidin dihydrochalcone (NHDC) and further comprises a premix comprising vanillin, glycyrrhizinate, stevia, and propylene glycol.

In another embodiment, the composition or animal feed additive comprises fenugreek and neohesperidin dihydrochalcone (NHDC) and further comprises a premix comprising vanillin, glycyrrhizinate and propylene glycol.

In another embodiment, the composition or animal feed additive comprises fenugreek and neohesperidin dihydrochalcone (NHDC) and further comprises a premix comprising vanillin, stevia and propylene glycol.

In another embodiment, the composition or animal feed additive comprises fenugreek and neohesperidin dihydrochalcone (NHDC) and further comprises a premix comprising glycyrrhizinate, stevia, and propylene glycol.

In another embodiment, the composition or animal feed additive comprises fenugreek and neohesperidin dihydrochalcone (NHDC) and further comprises a premix comprising vanillin, glycyrrhizinate, monk fruit and propylene glycol.

In another embodiment, the composition or animal feed additive comprises fenugreek and neohesperidin dihydrochalcone (NHDC) and further comprises a premix comprising vanillin, stevia, monk fruit and propylene glycol.

In another embodiment, the composition or animal feed additive comprises fenugreek and neohesperidin dihydrochalcone (NHDC) and further comprises a premix comprising glycyrrhizinate, stevia, monk fruit and propylene glycol.

In another embodiment, the composition or animal feed additive comprises fenugreek and neohesperidin dihydrochalcone (NHDC) and further comprises a premix comprising vanillin, glycyrrhizinate, stevia, monk fruit

In another embodiment, the composition or animal feed additive comprises fenugreek and neohesperidin dihydrochalcone (NHDC) and further comprises a premix comprising vanillin, glycyrrhizinate, stevia.

In another embodiment, the composition or animal feed additive comprises fenugreek and neohesperidin dihydrochalcone (NHDC) and further comprises a premix comprising vanillin, glycyrrhizinate.

In another embodiment, the composition or animal feed additive comprises fenugreek and neohesperidin dihydrochalcone (NHDC) and further comprises a premix comprising vanillin, stevia.

In another embodiment, the composition or animal feed additive comprises fenugreek and neohesperidin dihydrochalcone (NHDC) and further comprises a premix comprising glycyrrhizinate, stevia.

In another embodiment, the composition or animal feed additive comprises fenugreek and neohesperidin dihydrochalcone (NHDC) and further comprises a premix comprising vanillin, glycyrrhizinate, monk fruit.

In another embodiment, the composition or animal feed additive comprises fenugreek and neohesperidin dihydrochalcone (NHDC) and further comprises a premix comprising vanillin, stevia, monk fruit.

In another embodiment, the composition or animal feed additive comprises fenugreek and neohesperidin dihydrochalcone (NHDC) and further comprises a premix comprising glycyrrhizinate, stevia, monk fruit.

In one embodiment, the composition or animal feed additive comprises fenugreek and neohesperidin dihydrochalcone (NHDC) and further comprises a premix comprising vanillin, glycyrrhizinate, stevia, monk fruit and propylene glycol and further comprises a carrier comprising maltrodextrin.

In another embodiment, the composition or animal feed additive comprises fenugreek and neohesperidin dihydrochalcone (NHDC) and further comprises a premix comprising vanillin, glycyrrhizinate, stevia, and propylene glycol and further comprises a carrier comprising maltodextrin.

In another embodiment, the composition or animal feed additive comprises fenugreek and neohesperidin dihydrochalcone (NHDC) and further comprises a premix comprising vanillin, glycyrrhizinate and propylene glycol and further comprises a carrier comprising maltrodextrin.

In another embodiment, the composition or animal feed additive comprises fenugreek and neohesperidin dihydrochalcone (NHDC) and further comprises a premix comprising vanillin, stevia and propylene glycol and further comprises a carrier comprising maltodextrin.

In another embodiment, the composition or animal feed additive comprises fenugreek and neohesperidin dihydrochalcone (NHDC) and further comprises a premix comprising glycyrrhizinate, stevia, and propylene glycol and further comprises a carrier comprising maltodextrin.

In another embodiment, the composition or animal feed additive comprises fenugreek and neohesperidin dihydrochalcone (NHDC) and further comprises a premix comprising vanillin, glycyrrhizinate, monk fruit and propylene glycol and further comprises a carrier comprising maltodextrin.

In another embodiment, the composition or animal feed additive comprises fenugreek and neohesperidin dihydrochalcone (NHDC) and further comprises a premix comprising vanillin, stevia, monk fruit and propylene glycol and further comprises a carrier comprising maltodextrin.

In another embodiment, the composition or animal feed additive comprises fenugreek and neohesperidin dihydrochalcone (NHDC) and further comprises a premix comprising glycyrrhizinate, stevia, monk fruit and propylene glycol and further comprises a carrier comprising maltodextrin.

In one embodiment, the composition or animal feed additive comprises fenugreek and neohesperidin dihydrochalcone (NHDC) and further comprises a premix comprising vanillin, glycyrrhizinate, stevia, monk fruit and propylene glycol and further comprises a carrier comprising maltrodextrin and salt.

In another embodiment, the composition or animal feed additive comprises fenugreek and neohesperidin dihydrochalcone (NHDC) and further comprises a premix comprising vanillin, glycyrrhizinate, stevia, and propylene glycol and further comprises a carrier comprising maltodextrin and salt.

In another embodiment, the composition or animal feed additive comprises fenugreek and neohesperidin dihydrochalcone (NHDC) and further comprises a premix comprising vanillin, glycyrrhizinate and propylene glycol and further comprises a carrier comprising maltrodextrin and salt.

In another embodiment, the composition or animal feed additive comprises fenugreek and neohesperidin dihydrochalcone (NHDC) and further comprises a premix comprising vanillin, stevia and propylene glycol and further comprises a carrier comprising maltodextrin and salt.

In another embodiment, the composition or animal feed additive comprises fenugreek and neohesperidin dihydrochalcone (NHDC) and further comprises a premix comprising glycyrrhizinate, stevia, and propylene glycol and further comprises a carrier comprising maltodextrin and salt.

In another embodiment, the composition or animal feed additive comprises fenugreek and neohesperidin dihydrochalcone (NHDC) and further comprises a premix comprising vanillin, glycyrrhizinate, monk fruit and propylene glycol and further comprises a carrier comprising maltodextrin and salt.

In another embodiment, the composition or animal feed additive comprises fenugreek and neohesperidin dihydrochalcone (NHDC) and further comprises a premix comprising vanillin, stevia, monk fruit and propylene glycol and further comprises a carrier comprising maltodextrin and salt.

In another embodiment, the composition or animal feed additive comprises fenugreek and neohesperidin dihydrochalcone (NHDC) and further comprises a premix comprising glycyrrhizinate, stevia, monk fruit and propylene glycol and further comprises a carrier comprising maltodextrin and salt.

In one embodiment, the composition or animal feed additive comprises fenugreek and neohesperidin dihydrochalcone (NHDC) and further comprises a premix comprising vanillin, glycyrrhizinate, stevia, monk fruit and propylene glycol and further comprises a carrier comprising maltrodextrin and gum.

In another embodiment, the composition or animal feed additive comprises fenugreek and neohesperidin dihydrochalcone (NHDC) and further comprises a premix comprising vanillin, glycyrrhizinate, stevia, and propylene glycol and further comprises a carrier comprising maltodextrin and gum.

In another embodiment, the composition or animal feed additive comprises fenugreek and neohesperidin dihydrochalcone (NHDC) and further comprises a premix comprising vanillin, glycyrrhizinate and propylene glycol and further comprises a carrier comprising maltrodextrin and gum.

In another embodiment, the composition or animal feed additive comprises fenugreek and neohesperidin dihydrochalcone (NHDC) and further comprises a premix comprising vanillin, stevia and propylene glycol and further comprises a carrier comprising maltodextrin and gum.

In another embodiment, the composition or animal feed additive comprises fenugreek and neohesperidin dihydrochalcone (NHDC) and further comprises a premix comprising glycyrrhizinate, stevia, and propylene glycol and further comprises a carrier comprising maltodextrin and gum.

In another embodiment, the composition or animal feed additive comprises fenugreek and neohesperidin dihydrochalcone (NHDC) and further comprises a premix comprising vanillin, glycyrrhizinate, monk fruit and propylene glycol and further comprises a carrier comprising maltodextrin and gum.

In another embodiment, the composition or animal feed additive comprises fenugreek and neohesperidin dihydrochalcone (NHDC) and further comprises a premix comprising vanillin, stevia, monk fruit and propylene glycol and further comprises a carrier comprising maltodextrin and gum.

In another embodiment, the composition or animal feed additive comprises fenugreek and neohesperidin dihydrochalcone (NHDC) and further comprises a premix comprising glycyrrhizinate, stevia, monk fruit and propylene glycol and further comprises a carrier comprising maltodextrin and gum.

In one embodiment, the composition or animal feed additive comprises fenugreek and neohesperidin dihydrochalcone (NHDC) and further comprises a premix comprising vanillin, glycyrrhizinate, stevia, monk fruit and propylene glycol and further comprises a carrier comprising hydrogenated fat.

In another embodiment, the composition or animal feed additive comprises fenugreek and neohesperidin dihydrochalcone (NHDC) and further comprises a premix comprising vanillin, glycyrrhizinate, stevia, and propylene glycol and further comprises a carrier comprising hydrogenated fat.

In another embodiment, the composition or animal feed additive comprises fenugreek and neohesperidin dihydrochalcone (NHDC) and further comprises a premix comprising vanillin, glycyrrhizinate and propylene glycol and further comprises a carrier comprising hydrogenated fat.

In another embodiment, the composition or animal feed additive comprises fenugreek and neohesperidin dihydrochalcone (NHDC) and further comprises a premix comprising vanillin, stevia and propylene glycol and further comprises a carrier comprising hydrogenated fat.

In another embodiment, the composition or animal feed additive comprises fenugreek and neohesperidin dihydrochalcone (NHDC) and further comprises a premix comprising glycyrrhizinate, stevia, and propylene glycol and further comprises a carrier comprising hydrogenated fat.

In another embodiment, the composition or animal feed additive comprises fenugreek and neohesperidin dihydrochalcone (NHDC) and further comprises a premix comprising vanillin, glycyrrhizinate, monk fruit and propylene glycol and further comprises a carrier comprising hydrogenated fat.

In another embodiment, the composition or animal feed additive comprises fenugreek and neohesperidin dihydrochalcone (NHDC) and further comprises a premix comprising vanillin, stevia, monk fruit and propylene glycol and further comprises a carrier comprising hydrogenated fat.

In another embodiment, the composition or animal feed additive comprises fenugreek and neohesperidin dihydrochalcone (NHDC) and further comprises a premix comprising glycyrrhizinate, stevia, monk fruit and propylene glycol and further comprises a carrier comprising hydrogenated fat.

The present invention in various embodiments provides a composition or animal feed composition and method of improving the performance of livestock by using the composition or feed composition that synergizes the effects of fenugreek and neohesperidin dihydrochalcone (NHDC).

In one embodiment, a composition or animal feed additive for improving the performance of livestock comprises fenugreek and neohesperidin dihydrochalcone (NHDC).

The composition or animal feed additive may also include a premix. The premix components may be selected from the group consisting of vanillin, glycyrrhizinate, stevia, monk fruit, propylene glycol, alone, and combinations of any thereof.

The composition or animal feed additive may further include a carrier. The carrier may be selected from the group consisting of a salt, maltodextrin, gum, wax, starch, cellulose, cellulose derivative, dextrose, silica, hydrogenated fat, and combinations of any thereof.

The fenugreek and the neohesperidin dihydrochalcone (NHDC) may be present in the composition or animal feed additive such that upon consumption of the composition or animal feed additive by an animal, performance of the animal is improved. The animal may be a pig. The performance may be body weight gain, average daily feed intake and/or feed conversion ratio. The body weight gain can be a total body weight gain over a certain period of time.

The ratio of neohesperidin dihydrochalcone (NHDC) to fenugreek expressed in w/w is range from 1:9 to 1:1, preferably from 1:4 to 1:2, or more preferably the ratio is about 1:4.

Uses of the composition or animal feed additive may be to improve pig performance or to activate pig sweet taste receptors, or both.

In another embodiment, a method for enhancing the performance of an animal comprises mixing fenugreek and neohesperidin dihydrochalcone (NHDC) with an animal feed and feeding the animal feed to the animal.

A premix may also be mixed with the animal feed. The premix components may be selected from the group consisting of vanillin, glycyrrhizinate, stevia, monk fruit, propylene glycol, alone, or combinations of any thereof.

A carrier may also be mixed with the animal feed. The carrier may be selected from the group consisting of a salt, maltodextrin, gum, wax, starch, cellulose, cellulose derivative, dextrose, silica, hydrogenated fat, and combinations of any thereof.

The fenugreek and the neohesperidin dihydrochalcone (NHDC) may be fed to the animal in such amount that the performance of the animal is improved. The performance may be total average daily feed intake. The animal may be a pig.

The various formulations can be included in the piglet feed in a dose of from 25 to 250 ppm (g/t), preferably in a dose of from 75 to 200 ppm (g/t), more preferably in a dose of from 50 to 150 ppm (g/t). Most preferably, the various formulations can be included in the piglet feed in a dose of about 100 ppm (g/t), or up to a dose of 230 ppm (g/t).

Feed conversion ratio (FCR) or feed to gain ratio (F:G) is a ratio measuring feed efficiency and can be expressed in kg/kg or g/g.

In the methods of the present invention, the ratio of neohesperidin dihydrochalcone (NHDC) to fenugreek expressed in w/w may range preferably from 1:9 to 1:1 or more preferably from 1:4 to 1:2.

In the methods of the present invention, the fenugreek and the neohesperidin dihydrochalcone (NHDC) may stimulate pig sweet taste receptors.

The invention is further embodied in the following exemplary embodiments.

**Example 1.** Heterologous expression of pig sweet taste receptors.

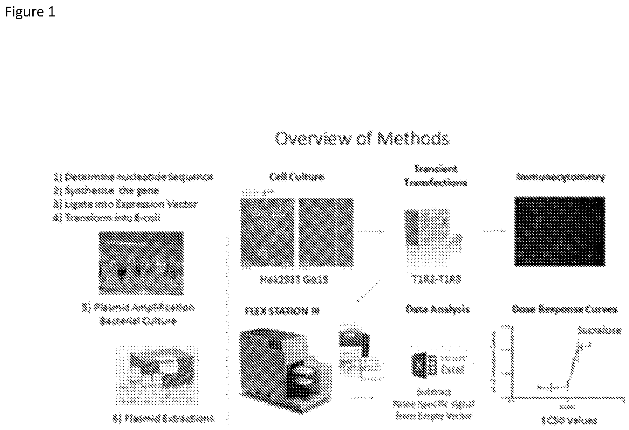

Figure 1 shows an overview of the expression of pig sweet taste receptor methods.

For the production of pig sweet taste receptor constructs, full length coding sequences of pig taste receptors T1R2 and T1R3 of pigs were synthesized and ligated into modified expression vectors pcDNA3/TO and pcDNA5/FRT/PM for evaluation. Amino-terminal sst-tags were added to facilitate cell membrane targeting, cytomegalovirus (CMV) promoters were added to control gene expression, and carboxylterminal FLAG or HSV tags were added to enable immunological detection of receptor subunits 1,2.

HEK293T-PEAK rapid cells containing the G-protein-coupled receptor subunit Gα15 were seeded onto Poly-D-Lysine coated glass coverslips in 6-well plates and subsequently transfected with vector constructs containing the taste receptor genes, using Lipofectamine 2000 as the transfection reagent. After incubation of cells for 48 hours, the cells were fixed with acetone/methanol in a proportion of 1:1 for 5 min on ice. Thereafter, the cells were incubated to block nonspecific binding. The cells were incubated with 10% donkey serum for 1 hour at room temperature (approximately 20 to 25°C).

Immunocytochemistry procedures were performed to visualize and confirm successful transfection of cells with taste receptor constructs, and localization of receptors to the cell membrane. Receptor proteins were detected by incubating cells with rabbit anti-FLAG and goat anti-HSV primary antibodies at 4°C overnight. After washing, cells were incubated with donkey anti-Pig-FITC and Goat anti-Pig IgG for 1 hour at room temperature in lead sulphide (PbS). Cells were rinsed and mounted using hard mounting medium, Vectashield. The receptor protein expression was visualized using an epifluorescence microscope and images were captured with a scientific CMOS camera.

Functional expression of sweet taste receptors. The pig sweet taste receptor function was analyzed by transfecting the HEK293T-PEAK rapid Gα15 cells with taste receptor constructs described herein. After transfection, the cells were loaded with Fluo-4 AM Ca²⁺-sensitive fluorescent dye, and incubated for 1 hour at 37°C.

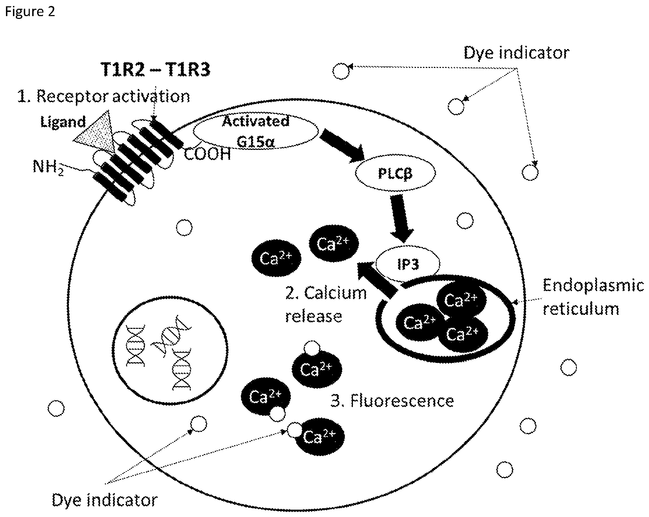

The transfected cells were analyzed with each of the sweeteners/compounds individually using a wide range of concentrations. The ligand binding and subsequent activation of the taste receptor causes an influx of Ca²⁺ ions into the cell, which can be measured as an increase in fluorescent signaling using a microplate reader as shown in Figure 2.

The dose-response curves are calculated by using mean fluorescence values of multiple wells receiving the same concentration of sweetener/compound, and subtracting fluorescence changes of corresponding cells transfected with empty vector (ΔF). Signals are normalized to background fluorescence (ΔF/F).

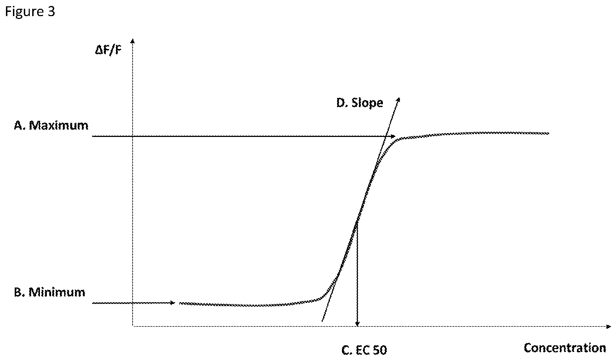

A measurable increase in background fluorescence (ΔF/F) upon agonist (sweetener/compound) application confirms taste receptor activation. Agonist-receptor interaction values, such as EC50, are calculated from nonlinear regression of signal amplitude versus compound concentration plots as shown in Figure 3 where: A is the maximum ΔF/F observed for the compound being tested; B is the minimum ΔF/F measured for the non-activated pig sweet taste receptor; C is the EC50 corresponding to the compound tested concentration enabling to reach 50% of the maximum ΔF/F obtained; and D is the slope of the curve.

The heterologous system of expression described allows the identification of synergistic combinations using EC50 value obtained with both single molecules and molecules in combination.

**Example 2.** Compounds tested for their ability to activate pig sweet taste receptors in the heterologous system described in Example 1.

The EC50 values of the molecules tested are shown in Table 1.

**Table 1. EC50 (mg/mL) of compounds activating pig sweet taste receptors.**

| Compounds | *In vitro* EC50 (mg/ml) for pig sweet taste receptors |
|---|---|
| Glucose | 4.40 |
| Rebaudioside A | 0.76 |
| NHDC # 020D066 | 0.62 |
| Fenuqreek #92484 | 2.02 |
| NHDC & Fenugreek (1:4) | 0.36 |

As shown in Table 1, fenugreek activated the pig sweet taste receptors at low concentrations. Further, the combination of fenugreek with NHDC showed a lower EC50 value as compared to fenugreek and NHDC individually, showing a synergy between NHDC and fenugreek.

**Example 3.** Assessment of premixes for activating pig sweet taste receptors.

The premixes contained compounds selected from vanillin, glycyrrhizinate, stevia, monk fruit, propylene glycol, or combinations of any thereof.

The different premixes, mixed with NHDC and fenugreek, were formulated and produced in combination with a carrier. Examples of the formulas used for *in vitro* evaluation of pig sweet taste receptor activation (EC 50) are shown in Table 2.

**Table 2. Formulas expressed in % w/w and the corresponding EC50 (mg/mL) relative to pig sweet taste receptor activation. Premix 1 included vanillin, glycyrrhizinate NH₃, stevia, monk fruit extract, and propylene glycol.**

| NAME | #3387-1 Fenugreek & NHDC | #3387-2 NHDC | #3387-3 Fenugreek |
|---|---|---|---|
| FENUGREEK | 0.220 | - | 0.220 |
| NHDC | 0.858 | 0.858 | - |
| PREMIX 1 | 5.181 | 5.181 | 5.181 |
| CARRIER | 93.741 | 93.961 | 94.599 |
| Total | 100.000 | 100.000 | 100.000 |
| *In vitro* EC50 (mg/mL) | 0.50 (±0.31) | 0.66 (±0.24) | 0.64 (±0.41) |

As illustrated in Example 3, even in the presence of a premix, the combination of fenugreek and NHDC showed a lower EC50 level, further confirming the synergistic effect of the two compounds.

### Example 4.

Another premix was evaluated for its ability to stimulate the pig taste receptors. The formulations and results are shown in Table 3.

**Table 3. Formulas expressed in % w/w and the corresponding EC50 (mg/mL) relative to pig sweet taste receptor activation. [000111]**

| NAME | Mix-1B Fenugreek & NHDC | Mix-2B NHDC | Mix-3B Fenugreek |
|---|---|---|---|
| FENUGREEK | 6.19 | - | 8.16 |
| NHDC | 24.15 | 25.74 | - |
| PREMIX 3 | 69.68 | 74.26 | 91.85 |
| TOTAL | 100 | 100 | 100 |
| *In vitro* EC50 | 0.38 (±0.04) | 1.27 (±0.06) | 1.53 (±0.08) |

Premix 3 of Table 3 included vanillin, glycyrrhizinate NH₃, and stevia. The *in vitro* results obtained with Mix-1B (including fenugreek and NHDC) showed the synergistic effect of the combination fenugreek and NHDC on the pig sweet taste receptor activation.

### Example 5.

Additional formulas including fenugreek, NHDC, and various carriers in addition to premixes were evaluated for their ability to activate pig sweet taste receptors *in vitro.* The formulations and results are shown in Table 4.

**Table 4. Formulas expressed in % w/w and the corresponding EC50 (mg/mL) relative to pig sweet taste receptor activation.**

| NAME | SP #2021-0028-M | MI #CH033657-B15 | MI MFJ #2021-0056-001 |
|---|---|---|---|
| FENUGREEK | 0.2 | 0.220 | 0.22 |
| NHDC | 0.8 | 0.858 | 0.86 |
| PREMIX | 2.6* | 5.247** | 31.25*** |
| CARRIER | 91.4 | 89.241 | 63.14 |
| WATER | 5.0 | 4.434 | 4.53 |
| TOTAL | 100.0 | 100.000 | 100.00 |
| *In vitro* EC50 | 4.07 | 12.4 | 1.2 |

| | | | |
|---|---|---|---|
| * comprising vanillin, glycyrrhizinate NH₃, stevia, propylene glycol ** comprising vanillin, glycyrrhizinate NH₃, stevia, monk fruit extract, propylene glycol *** comprising vanillin, glycyrrhizinate NH₃, stevia, monk fruit juice, propylene glycol | | | |

The *in vitro* results of Table 4 showed that the aromatic premix and carrier can influence the EC50 value in the formulas *in vitro.*

### Example 6.

Some of the formulations evaluated *in vitro* were also evaluated *in vivo* in a pig feed. Table 5 shows results of different formulations including NHDC, fenugreek, and a combination thereof. The *in vivo* trial showed a correlation between the *in vitro* sweet taste receptor activation (EC50) and piglet performance.

160 piglets (10 pens of 4 piglets per dietary treatment) of 21 days of age were fed one of the formulations of Table 5 and performance was measured over a 27 days period. The performance is shown in Table 5.

**Table 5. Piglet performance after being fed control, fenugreek and NHDC, NHDC, or fenugreek formulation.**

| Parameters | Control | Fenugreek & NHDC* | NHDC* | Fenugreek* |
|---|---|---|---|---|
| Body weight 27 days on feed (kg) | 15.29b | 16.24a | 15.08b | 15.19b |
| Total average daily feed intake (kg) | 0.488 | 0.519 | 0.470 | 0.475 |
| F:G or FCR | 1.530 | 1.480 | 1.514 | 1.516 |

| | | | | |
|---|---|---|---|---|
| a, b: P < 0.05 *including a premix comprising vanillin, glycyrrhizinate, stevia, monk fruit, propylene glycol and a carrier comprising maltodextrin and salt. | | | | |

The various formulations were included at 100 ppm (g/t) in the piglet feed, and the products can be included in the piglet feed up to a dose of 230 ppm (g/t).

The *in vivo* results showed an improved performance (feed intake, final body weight, and feed conversion ratio (FCR) or feed to gain ratio (F:G)) of piglets fed the formula containing the fenugreek and NHDC which indicated a better feed efficiency. These *in vivo* data confirm the beneficial effect of the combination of fenugreek and NHDC already observed using the *in vitro* system (lower EC50).

While the present invention has been described with reference to certain exemplary embodiments, compositions, and uses thereof, it will be recognized by those of ordinary skill in the art that various substitutions, modifications or combinations of any of the exemplary embodiments may be made without departing from the scope of the invention. Thus, the invention is not limited by the description of the exemplary embodiments.

## Claims

1. A composition comprising fenugreek and neohesperidin dihydrochalcone (NHDC), wherein the ratio of neohesperidin dihydrochalcone (NHDC) to fenugreek expressed in w/w ranges from 1:9 to 1:1.

2. The composition of claim 1, wherein the ratio of neohesperidin dihydrochalcone (NHDC) to fenugreek expressed in w/w ranges from 1:4 to 1:2.

3. The composition of claim 2, wherein the ratio of neohesperidin dihydrochalcone (NHDC) to fenugreek expressed in w/w is about 1:4.

4. The composition of any one of claims 1-3, further comprising a premix.

5. The composition of claim 4, wherein the premix is selected from the group consisting of vanillin, glycyrrhizinate, stevia, monk fruit, propylene glycol, and combinations of any thereof.

6. The composition of any one of claims 1-5, further comprising a carrier.

7. The composition of claim 6, wherein the carrier is selected from the group consisting of a salt, maltodextrin, gum, wax, starch, cellulose, cellulose derivative, dextrose, silica, hydrogenated fat, and combinations of any thereof.

8. Use of the composition of any one of claims 1-7 as a feed additive.

9. Use of claim 8 as a feed additive for an animal.

10. Use of claim 9, wherein the animal is a pig.

11. Use of claim 9 or 10 wherein the fenugreek and the neohesperidin dihydrochalcone (NHDC) are present in the composition such that upon consumption of the composition by the animal, performance of the animal is improved.

12. Use of claim 11, wherein the performance is body weight gain, average daily feed intake and/or feed conversion ratio.

13. Use of claim 9 or 10 to activate the sweet taste receptors of the animal.

14. A method for enhancing the performance of an animal, the method comprising:
mixing the composition of any one of claims 1-7 with an animal feed; and
feeding the animal feed to the animal.

15. The method of claim 14, wherein the performance is body weight gain, average daily feed intake and/or feed conversion ratio.

16. The method of claim 14 or 15, wherein the animal is a pig.

17. A method for stimulating sweet taste receptors of an animal, the method comprising:
mixing the composition of any one of claims 1-7 with an animal feed; and
feeding the animal feed to the animal.

18. The method according to claim 17, wherein the animal is a pig.

## Patentansprüche

1. Zusammensetzung, aufweisend Bockshornklee und Neohesperidin-Dihydrochalcon (NHDC), wobei das Verhältnis von Neohesperidin-Dihydrochalcon (NHDC) zu Bockshornklee, ausgedrückt in Gew.-%, im Bereich von 1:9 bis 1:1 liegt.

2. Zusammensetzung nach Anspruch 1, wobei das Verhältnis von Neohesperidin-Dihydrochalkon (NHDC) zu Bockshornklee, ausgedrückt in Gew.-%, im Bereich von 1:4 bis 1:2 liegt.

3. Zusammensetzung nach Anspruch 2, wobei das Verhältnis von Neohesperidin-Dihydrochalcon (NHDC) zu Bockshornklee, ausgedrückt in Gew.-%, etwa 1:4 beträgt.

4. Zusammensetzung nach einem der Ansprüche 1 bis 3, ferner umfassend eine Vormischung umfasst.

5. Zusammensetzung nach Anspruch 4, wobei die Vormischung ausgewählt ist aus der Gruppe, bestehend aus Vanillin, Glycyrrhizinat, Stevia, Mönchsfrucht, Propylenglykol und Kombinationen davon.

6. Zusammensetzung nach einem der Ansprüche 1 bis 5, ferner umfassend einen Träger.

7. Die Zusammensetzung nach Anspruch 6, wobei der Träger ausgewählt ist aus der Gruppe, bestehend aus einem Salz, Maltodextrin, Gummi, Wachs, Stärke, Cellulose, Cellulosederivat, Dextrose, Siliciumdioxid, hydriertem Fett und Kombinationen davon.

8. Verwendung der Zusammensetzung nach einem der Ansprüche 1 bis 7 als Futtermitteladditiv.

9. Verwendung der Zusammensetzung nach Anspruch 8 als Futtermitteladditiv für ein Tier.

10. Verwendung nach Anspruch 9, wobei das Tier ein Schwein ist.

11. Verwendung nach Anspruch 9 oder 10, wobei der Bockshornklee und das Neohesperidin-Dihydrochalcon (NHDC) in der Zusammensetzung derart vorhanden sind, dass nach Verzehr der Zusammensetzung durch das Tier eine Leistungsfähigkeit des Tieres verbessert wird.

12. Verwendung nach Anspruch 11, wobei die Leistungsfähigkeit eine Körpergewichtszunahme, eine durchschnittliche tägliche Futteraufnahme und/oder eine Futterverwertungsrate ist.

13. Verwendung nach Anspruch 9 oder 10 zum Aktivieren der Süßrezeptoren des Tieres.

14. Verfahren zum Verbessern der Leistungsfähigkeit eines Tieres, wobei das Verfahren umfasst:
Mischen der Zusammensetzung nach einem der Ansprüche 1 bis 7 mit einem Tierfutter; und
Verfüttern des Tierfutters an das Tier.

15. Verfahren nach Anspruch 14, wobei die Leistungsfähigkeit eine Körpergewichtszunahme, eine durchschnittliche tägliche Futteraufnahme und/oder eine Futterverwertungsrate ist.

16. Verfahren nach Anspruch 14 oder 15, wobei das Tier ein Schwein ist.

17. Verfahren zum Stimulieren der Süßrezeptoren eines Tieres, wobei das Verfahren umfasst:
Mischen der Zusammensetzung nach einem der Ansprüche 1 bis 7 mit einem Tierfutter; und
Verfüttern des Tierfutters an das Tier.

18. Verfahren nach Anspruch 17, wobei das Tier ein Schwein ist.

## Revendications

1. Composition comprenant du fenugrec et de la néohespéridine dihydrochalcone (NHDC), dans laquelle le rapport entre la néohespéridine dihydrochalcone (NHDC) et le fenugrec, exprimé en poids/poids, est compris entre 1:9 et 1:1.

2. Composition selon la revendication 1, dans laquelle le rapport entre la néohespéridine dihydrochalcone (NHDC) et le fenugrec, exprimé en poids/poids, est compris entre 1:4 et 1:2.

3. Composition selon la revendication 2, dans laquelle le rapport entre la néohespéridine dihydrochalcone (NHDC) et le fenugrec, exprimé en poids/poids, est d'environ 1:4.

4. Composition selon l'une quelconque des revendications 1 à 3, comprenant en outre un prémélange.

5. Composition selon la revendication 4, dans laquelle le prémélange est choisi parmi le groupe constitué de la vanilline, du glycyrrhizinate, de la stévia, du fruit des moines, du propylène glycol et de toute combinaison de ceux-ci.

6. Composition selon l'une quelconque des revendications 1 à 5, comprenant en outre un support.

7. Composition selon la revendication 6, dans laquelle le support est choisi parmi le groupe constitué d'un sel, de maltodextrine, de gomme, de cire, d'amidon, de cellulose, d'un dérivé de cellulose, de dextrose, de silice, de graisse hydrogénée et de combinaisons de n'importe lesquels de ceux-ci.

8. Utilisation de la composition selon l'une quelconque des revendications 1 à 7 en tant qu'additif alimentaire.

9. Utilisation de la composition selon la revendication 8 en tant qu'additif alimentaire pour un animal.

10. Utilisation de la composition selon la revendication 9, dans laquelle l'animal est un porc.

11. Utilisation selon la revendication 9 ou 10, dans laquelle le fenugrec et la néohespéridine dihydrochalcone (NHDC) sont présents dans la composition de telle sorte que, lors de la consommation de la composition par l'animal, les performances de celui-ci sont améliorées.

12. Utilisation selon la revendication 11, dans laquelle les performances correspondent à la prise de poids, à la consommation alimentaire quotidienne moyenne et/ou au taux de conversion alimentaire.

13. Utilisation selon la revendication 9 ou 10 pour activer les récepteurs du goût sucré de l'animal.

14. Procédé pour améliorer les performances d'un animal, le procédé comprenant :
le mélange de la composition selon l'une quelconque des revendications 1 à 7 avec un aliment pour animaux ; et
l'administration de l'aliment pour animaux à l'animal.

15. Procédé selon la revendication 14, dans lequel les performances sont la prise de poids, la consommation alimentaire quotidienne moyenne et/ou le taux de conversion alimentaire.

16. Procédé selon la revendication 14 ou 15, dans lequel l'animal est un porc.

17. Procédé destiné à stimuler les récepteurs du goût sucré d'un animal, ce procédé comprenant :
le mélange de la composition de l'une quelconque des revendications 1 à 7 avec un aliment pour animaux ; et
l'administration de l'aliment pour animaux à l'animal.

18. Procédé selon la revendication 17, dans lequel l'animal est un porc.
